# EUROPÄISCHE PATENTANMELDUNG

(11) **EP 1 221 649 A2**
(43) Veröffentlichungstag der Anmeldung: **10.07.2002**
(21) Anmeldenummer: 01129117.6
(22) Anmeldetag: 07.12.2001
(51) Int. Cl.: G06F 9/44

(54) **Addon-Mechanismus für ein Steuerungssystem basierend auf einem Erweiterungsdatenfeld**

(30) Priorität: 22.12.2000 DE 10065955; 15.06.2001 DE 10128958
(71) Anmelder: SIEMENS AKTIENGESELLSCHAFT, 80333 München (DE)
(72) Erfinder: Rosenberg, Jens Ansgar, 90459 Nürnberg (DE); Wagner, Peter, 91217 Hersbruck (DE)

(57) **Zusammenfassung**

Die flexible Erweiterung eines Steuersystems soll ohne Eingriff in das originäre Objektmodell und damit der Steuerungssoftware möglich sein. Hierzu wird vorgeschlagen, an Objektdaten (Obj_2) Erweiterungsdatenelemente (Ext_1, Ext_2), die tool- oder anwenderspezifische Daten enthalten, anzufügen. Ein Objekttyp kann dann wahlweise für die bestehenden oder neuen Tools (SnapIn_1, SnapIn 2) instanziiert werden. Somit lassen sich Erweiterungen nachträglich instanziieren, ohne das bestehende Objektmodell in seinem Wesen zu beeinflussen.

## Beschreibung

Die vorliegende Erfindung betrifft eine Vorrichtung und ein Verfahren zum Steuern oder Regeln eines Systems basierend auf einem Objektmodell, welches die Funktionalität eines Runtimesystems und/oder des zu steuernden bzw. zu regelnden Systems repräsentiert, wobei das Objektmodell Objekttypen mit vorbestimmter Datenstruktur umfasst, welche Objekttypen von einem oder mehreren internen Standardtools verarbeitbar sind.

Moderne industrielle Steuerungen bestehen in der Regel aus einem so genannten Engineering- und einem so genannten Runtimesystem. Mit dem Engineeringsystem wird ein Steuerungsprogramm entwickelt, welches dann anschließend in das Runtimesystem geladen wird. Das Runtimesystem gewährleistet dann die Zeitablaufsteuerung des zu steuernden Systems.

Die Funktionalität des zu steuernden Systems und/oder des Runtimesystems lässt sich durch ein Objektmodell ausdrücken. Das Objektmodell hat Wirkung im Engineeringsystem und/oder Runtimesystem und ist'Basis für das Engineering der Steuerung, beispielsweise die Inbetriebnahme, Programmierung etc. Darüber hinaus ist das Objektmodell Basis für die Datenhaltung der Steuerung. Die Elemente des Objektmodells lassen sich in verschiedene Objekttypen kategorisieren. Der Objekttyp ist die softwaretechnische Form einer Beschreibung von Objektinstanzen. In der einfachsten Ausprägung bezieht sich diese Beschreibung auf die Datenstruktur, die durch eine Objektinstanz im Speicher repräsentiert wird. In heutigen Systemen beschreibt der Objekttyp auch Operationen, die auf diesen Datenstrukturen durchgeführt werden können und verleiht den Objektinstanzen somit auch eine Funktionalität. Einer dieser Objekttypen sind beispielsweise Programmcontainer, die zur Verwaltung und Ablage von Anwenderprogrammen dienen. Weitere Objekttypen sind Technologieobjekttypen wie beispielsweise für Positionierachsen, Gleichlaufachsen, Messtaster, Kurvenscheiben etc., deren Funktionalität datentechnisch im jeweiligen Objekttyp hinterlegt ist. Ein bedeutender Objekttyp sind ferner so genannte "devices", die zur Verwaltung und Ablage der Hardware-Konfigurationseinstellungen dienen.

Alle Objekttypen sind instanziierbar, d. h. konkret ausgestaltbar. So kann beispielsweise einem Gleichlaufobjekt ein konkretes Übersetzungsverhältnis zugewiesen werden. Die Technologieobjekttypen können in Form von Technologiepaketen organisiert sein. Die Instanziierung erfolgt in der Regel im Engineeringsystem. Das Laden der instanziierten Objekte in das Runtimesystem stößt die Instanziierung entsprechender Objekte im Runtimesystem an, auf die die Daten der Objekte des Engineeringsystems übertragen werden.

Eine Objektinstanz ist zunächst eine Datenstruktur im Speicher eines Rechensystems. Aus einem Objekttyp können beliebig viele (soweit es das zugrundeliegende Rechensystem erlaubt) Objektinstanzen instanziiert werden. Die Größe und Einteilung der Datenstruktur einer jeden Objektinstanz folgt dabei der durch den Objekttyp gegebenen Beschreibung. Objektinstanzen werden zur Laufzeit eines Editors, also während das Programmsystem auf einem Rechensystem im Engineeringsystem ausgeführt wird, angelegt.

Das Objektmodell umfasst eine Menge von Objekttypen und beschreibt die Relationen zwischen aus den Objekttypen instanziierten Objektinstanzen. Der Aufwand für die Erstellung neuer Objekttypen, die sich in ein komplexes Objektmodell einfügen sollen, kann vergleichsweise groß sein.

Im Engineeringsystem kann mit verschiedenen Tools auf Objekte (Instanzen) bestimmter Objekttypen zugegriffen werden. D. h. die Objekttypen werden bei der Erstellung des Softwaresystems festgelegt und können im Engineeringsystem nicht mehr geändert werden. Dementsprechend erlaubt das Engineeringsystem einen oder mehrere Views auf die Instanzen bestimmter Objekttypen. Im Rahmen der Programmierung können dies beispielsweise verschiedene Editoren für eine textuelle oder graphische Anwenderprogrammierung sein.

Die Tools und Views des Engineeringsystems werden auch als SnapIns bezeichnet. Dem Engineeringsystem können neben den im Grundsystem vorhandenen SnapIns weitere Snaplns hinzugefügt werden.

Grundsätzlich unterliegen auch Engineeringsysteme wie jede andere Software einer ständigen Erneuerung, Erweiterung und Verbesserung. Bei heutigen Realisierungsmechanismen für Steuerungserweiterungen kommt es aber zu folgenden Problemen: Das Einbringen einer neuen Programmiersicht, z. B. das Einbringen graphischer Programmierung neben textueller Programmierung, ist heute nicht in integrierter Art und Weise möglich, ohne die Grundfunktionalität des Engineeringsystems zu erweitern. Eine mögliche externe Erweiterung durch externe Tools erfordert eine eigene Datenhaltung, die dann nicht in das bestehende System integriert ist. Darüber hinaus ist die Erweiterung einer bestehenden, beispielsweise graphischen Programmiersprache um zusätzliche Programmiericons, wodurch eine Erweiterung der Datenhaltung erforderlich wird, in der Regel nicht ohne Eingriff bzw. Erweiterung in das bestehende Engineeringsystem möglich. So kann beispielsweise ein bestehender Flow-Chart-Editor nicht ohne weiteres um Icons für bestimmte Bibliotheksfunktionen erweitert werden. Ferner bieten heutige OEM-Schnittstellen nur eine spezifische und eingeschränkte Integrationstiefe in das Engineeringsystem. Schließlich bringen Erweiterungen der Engineeringsystemfunktionalität über externe Tools in der Regel Konsistenzprobleme in der Datenhaltung mit sich.

Die Aufgabe der vorliegenden Erfindung besteht somit darin, in Bezug auf Steuerungen ein Verfahren für die flexible Erweiterung von Steuerungssystemen zu beschreiben, das ohne Eingriff in das originäre Objektmodell auskommt.

Erfindungsgemäß wird diese Aufgabe gelöst durch ein Vorrichtung zum Steuern oder Regeln eines Systems basierend auf einem Objektmodell, welches die Funktionalität eines Runtimesystems und/oder des zu steuernden bzw. zu regelnden Systems repräsentiert, mit einer Datenverarbeitungseinrichtung zur Verarbeitung von ersten Objekttypen mit vorbestimmter Datenstruktur, die Bestandteil des Objektmodells und zu Objekten instanziierbar sind, wobei mit der Datenverarbeitungseinrichtung zweite Objekttypen, die sich jeweils auf einen oder mehrere der ersten Objekttypen derart beziehen, dass beim Instanziieren ein Objekt des ersten Objekttyps mit mindestens einem für den zweiten Objekttypen spezifischen Erweiterungsdatenfeld erweiterbar ist, erzeugbar und/oder verarbeitbar sind.

Ferner wird die genannte Aufgabe gelöst durch ein Verfahren zum Steuern oder Regeln eines Systems basierend auf einem Objektmodell, welches die Funktionalität eines Runtimesystems und/oder des zu steuernden bzw. zu regelnden Systems repräsentiert, wobei das Objektmodell einen ersten Objekttyp mit vorbestimmter Datenstruktur umfasst, durch Einlesen oder Erzeugen eines zweiten Objekttyps, der sich auf den ersten Objekttyp bezieht, und Instanziieren des zweiten Objekttyps, wobei ein dem ersten Objekttyp zugeordnetes Objekt gebildet wird, an das ein Erweiterungsdatenfeld gemäß dem zweiten Objekttyp angebracht wird.

Vorteilhafte Weiterentwicklungen finden sich in den Unteransprüchen.

Der erfindungsgemäße Erweiterungsmechanismus ermöglicht in vorteilhafter Weise eine skalierbare funktionelle Erweiterung der Steuerungssoftware mit hoher Integrationstiefe im Engineeringsystem ohne Eingriff in die zu Grunde liegende Software. Die Erweiterungen können derart ausgestaltet werden, dass alle bestehenden Engineeringoperationen und Transaktionen auf die Objekttypen, z. B. Browser, Viewer, Kopieren, Einfügen, Import, Export, usw., auch auf die Erweiterungen wirken und in gewohnter Weise genutzt werden können.

Ein weiterer Vorteil besteht darin, dass OEM-Erweiterungen für neue Objekttypen und neue Viewer generisch möglich sind und keine Änderungen der Basissoftware im Engineeringsystem erfordern.

Die vorliegende Erfindung wird nun anhand der beigefügten Zeichnungen näher erläutert, in denen zeigen:
Fig. 1 ein Datenstrukturschema des erfindungsgemäßen Erweiterungsmechanismus;
Fig. 2 ein Schema des funktionellen Zusammenhangs zwischen Tools und Objekten; und
Fig. 3 eine Kombination der Strukturen gemäß den Fig. 1 und 2.

Das folgende Ausführungsbeispiel zeigt eine bevorzugte Anwendung der vorliegenden Erfindung. Häufig muss ein neuer View oder Editor eigene Daten an den von ihm dargestellten oder bearbeiteten Objektinstanzen ablegen. Da weder Form noch Umfang dieser Daten zum Zeitpunkt der programmtechnischen Erstellung des Objektmodells bekannt sind, können in den Datenstrukturen, die durch die Objekttypen definiert werden, keine entsprechenden Datenfelder fest reserviert werden. Zur Lösung dieses Problems werden ein oder mehrere Extensions bzw. Erweiterungsdatenfelder Ext_1, Ext_2 eingeführt.

Extensions sind eigenständige Objekte, deren Beschreibungen nicht im Objektmodell des Steuerungssystems auftauchen. Die Typen, die Extensions beschreiben, sind vielmehr Bestandteile des "privaten" Objektmodells der Snaplns, die ihre Extensions in das Engineeringsystem einführen.

Spezielle Datenfelder sind in den Objekttypen, die die Datenstruktur beschreiben, des Objektmodells des Steuersystems vorgesehen. Snaplns, die eine oder mehrere Extensions an eine Objektinstanz anfügen möchten, tragen in diese Datenfelder Vorschriften ein, mit denen es dem Engineeringsystem ermöglicht wird, Extension-Objekte der gewünschten Art zu instanziieren. Eine Extension, die auf diese Weise einer Objektinstanz zugeordnet wurde, bildet mit dieser Objektinstanz eine Einheit, d. h. sie wird mit der Objektinstanz abgespeichert, verschoben, gelöscht, exportiert usw. Das Objektmodell des Steuerungssystems, d. h. das Basisobjektmodell wird bei der Hinzufügung von Extensions nicht modifiziert.

Ein Projektbrowser im Engineeringsystem stellt die Projektstruktur dar, indem er Objektinstanzen und ihre Verknüpfungen anzeigt. Es besteht ein unmittelbarer Zusammenhang zwischen Projektstruktur und Objektmodell dahingehend, dass das Objektmodell unter anderem beinhaltet, welche Objektinstanzen in einem Projekt möglicherweise erzeugt werden können und welche Relationen zwischen den Instanzen bestimmter Typen auftreten können.

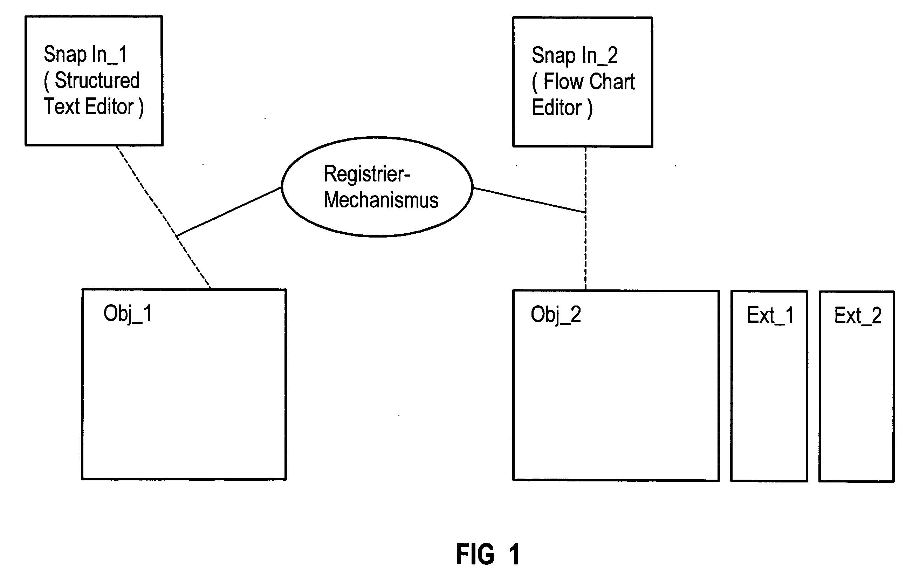

In entsprechenden Fenstern kann der Anwender Objektdaten beobachten bzw. editieren. Im vorliegenden Beispiel enthält die originäre Software für die Steuerung gemäß Fig. 1 in der Workbench einen Structured-Text-Editor als SnapIn_1. Das Basisengineeringsystem einer Entwicklungsabteilung bzw. das Engineeringsystem eines Anlagenbauers stellt nach Instanziierung eines Objekttyps ein Objekt Obj_1 zur Verfügung, das aufgrund seines Objekttyps für den Structured-Text-Editor registriert ist. Dies bedeutet, dass beim Navigieren auf das Objekt Obj_1 im Projektbrowser automatisch der Structured-Text-Editor aufgerufen wird, so dass das Objekt Obj_1 damit editierbar wird.

Darüber hinaus stellt das Basisengineeringsystem ein Objekt Obj_2 zur Verfügung, das grundsätzlich auch mit dem Structured-Text-Editor editierbar ist. Das Objekt Obj_2 ist durch zwei Erweiterungsdatenelemente Ext_1 und Ext_2 erweitert. Die Anzahl der Erweiterungsdatenelemente, die an das Basisobjekt angeknüpft werden, kann beliebig gewählt werden. Das Objekt Obj_2 mit den beiden Erweiterungsdatenelementen Ext_1 und Ext_2 ist im vorliegenden Fall für den zusätzlichen Flow-Chart-Editor SnapIn_2 registriert. Dies bedeutet, dass beim Navigieren auf das erweiterte Objekt Obj_2 im Projektbrowser automatisch der Flow-Chart-Editor SnapIn_2 abgerufen wird und das Objekt dort zur Edition bereitsteht.

Darüber hinaus können die Erweiterungsdatenelemente anwenderspezifische Daten, z. B. über einen vom Anwender bevorzugten Editor, enthalten.

Fig. 1 verdeutlicht somit einen Erweiterungsmechanismus, mit dem ein Basisengineeringsystem ohne Änderung der ursprünglichen Funktionalität um einen zusätzlichen Editor SnapIn_2 erweiterbar ist. Die Erweiterung der Tools bzw. Views für einen Objekttyp wird durch Hinzufügen zusätzlicher Daten am Objekttyp realisiert. Dabei werden ohne Erweiterung der zu Grunde liegenden Engineeringsystemsoftware Daten-Extensions an bestehende Objekttypen angebracht und homogen in die bestehende Datenhaltung integriert. Durch einen Registrierungsmechanismus können sich SnapIns oder ähnliche Erweiterungstools (SnapIn_2) an dem Objekttyp mit der jeweils vorgesehenen Anzahl an Extensions anmelden und für die Tools bzw. Views entsprechende Objektinstanzen erzeugen.

Diese Art der Erweiterungen ermöglicht einerseits deren Integration in die bestehende Projektdatenhaltung und damit eine konsistente Datenhaltung und andererseits deren Integration in das bestehende Objektmodell, d. h. eine Integration in alle mit dem Objektmodell verbundenen Engineeringfunktionalitäten wie beispielsweise Projektbrowser.

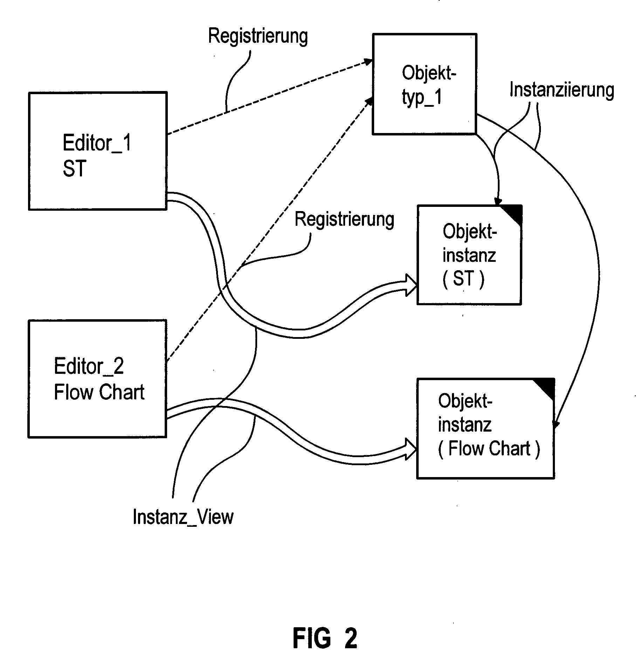

Fig. 2 zeigt ein konkretes Beispiel der Registrierung von mehreren Editoren für einen Objekttyp und dessen Instanziierung in mehrere Objekte. Im vorliegenden Fall wird ein bestehender oder neu hinzuzufügender Structured-Text-Editor Editor_1 ebenso wie ein bestehender oder neu hinzuzufügender Flow-Chart-Editor Editor_2 für einen Objekttyp_1 registriert. Der Objekttyp_1 lässt sich somit im Format Structured-Text und ebenso im Format Flow-Chart instanziieren. Eine jeweilige Instanz-View-Verknüpfung sorgt nun dafür, dass die Structured-Text-Objektinstanz vom Structured-Text-Editor und die Flow-Chart-Objektinstanz vom Flow-Chart-Editor auf Anfrage zur Edition gebracht wird.

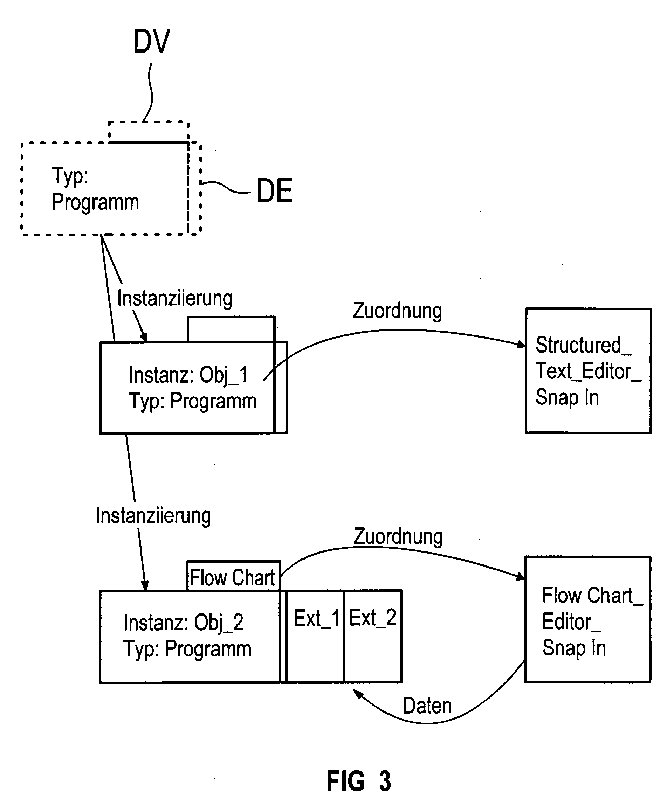

Eine Kombination der Ausführungsformen von Fig. 1 und Fig. 2 ist in Fig. 3 gezeigt. Ein Objekttyp "Programm" wird beim Erzeugen im Engineeringsystem mit einem Datenfeld DV für einen virtuellen Typ versehen. In dem Datenfeld DV ist eine Virtual-Typ-ID-Liste bzw. ein Virtual-Typ-ID-Feld speicherbar, das die Registrierungsinformation für ein Zusatztool bzw. SnapIn aufnehmen kann. Darüber hinaus wird an dem Objekttyp "Programm" ein Datenfeld DE für das Anbringen von Extensions angehängt.

Die Instanziierung des Objekttyps "Programm" kann im Engineeringsystem nun auf zwei Arten erfolgen. Zum einen erfolgt die Instanziierung zu einem Objekt Obj_1, bei dem das Datenfeld DV nicht verwendet wird. Daher erfolgt die Zuordnung zu einem Editor standardmäßig über den Objekttyp "Programm".

Die weitere mögliche Instanziierung bringt ein Objekt Obj_2 hervor. Dabei wird das Datenfeld DV für einen virtuellen Typ, der nicht Teil des Basisobjektmodells ist, zur Registrierung benutzt. Im vorliegenden Fall ist das Objekt Obj_2 für den Flowchart_Editor registriert. D. h. das Virtual-Typ-ID-Feld DV ist mit Zuordnungsinformation für den Flowchart_Editor belegt.

Der Flowchart_Editor verwendet flowchartspezifische Informationen, die in Standardobjekten nicht abgelegt werden können. Da aber das Objekt Obj_2 über ein Datenfeld DE verfügt, können die flowchartspezifischen Informationen in einem oder mehreren Extensions Ext_1, Ext_2 abgelegt werden. Somit kann der Benutzer individuelle SnapIns in vollem Umfang benutzen.

Zusammenfassend weist das oben beschriebene Steuerungssystem folgende Vorteile auf:
- die Funktionalität ist über ein Objektmodell repräsentiert
- das Objektmodell hat Wirkung im Engineeringsystem und/oder Runtimesystem
- das Objektmodell ist Basis für das Engineering der Steuerung (für z. B. Inbetriebnahme, Programmierung,..)
- das Objektmodell ist Basis für die Datenhaltung der Steuerung
- das auf dem Objektmodell basierende Engineeringsystem der Steuerung ist ohne Eingriff in das Engineeringsystem durch Einbringen von Extensions flexibel erweiterbar
- alle bestehenden Engineeringoperationen und Transaktionen auf die Objekttypen (z. B. Browser, Viewer, Kopieren, Einfügen, Import, Export,..) wirken auch auf die Erweiterungen und können in der gleichen Weise genutzt werden, da die Erweiterungen direkt am Objekt erfolgen
- OEM-Erweiterungen für Erweiterungen der Objekttypen, neue Views auf bestehende Objekttypen, neue Objekttypen sind generisch möglich und erfordern keine Änderung der Basissoftware (Engineeringsystem)
- ein Extensionmechanismus mit generischer Schnittstelle ist vorhanden, um Erweiterungen im Userinterface (neue Editoren, neue Views) und/oder in der Datenhaltung vorzunehmen
- neue Engineerfunktionalitäten bzw. neuer Engineering-Views auf bestehende Objekttypen im Objektmodell können hinzugefügt werden
- bestehende Objekttypen können durch die Anlage zusätzlicher Daten am Objekttyp erweitert werden
- neue Objekttypen können in das vorhandene Objektmodell an beliebiger Stelle hinzugefügt werden.

## Patentansprüche

1. Vorrichtung zum Steuern oder Regeln eines Systems basierend auf einem Objektmodell, welches die Funktionalität eines Runtimesystems und/oder des zu steuernden bzw. zu regelnden Systems repräsentiert, mit
einer Datenverarbeitungseinrichtung zur Verarbeitung eines ersten Objekttyps mit vorbestimmter Datenstruktur, der Bestandteil des Objektmodells und zu Objekten instanziierbar ist,
**dadurch gekennzeichnet, dass**
mit der Datenverarbeitungseinrichtung ein zweiter Objekttyp erzeugbar und/oder verarbeitbar ist, der mit dem ersten Objekttyp im Wesentlichen übereinstimmt, jedoch mindestens ein für den zweiten Objekttyp spezifisches Erweiterungsdatenfeld (DE) umfasst.

2. Vorrichtung nach Anspruch 1, wobei mit der Datenverarbeitungseinrichtung mindestens ein Typdatenfeld (DV) an einen der ersten Objekttypen anbringbar ist.

3. Vorrichtung nach Anspruch 2, wobei in dem mindestens einen Typdatenfeld Registrierungsinformation für eines oder mehrere von Standard- oder Zusatztools, insbesondere für einen spezifischen Editor, speicherbar ist.

4. Vorrichtung nach Anspruch 3, wobei eines der Standardtools ein Standardeditor und/oder -view und eines der Zusatztools ein erweiterter Editor und/oder View mit erweiterter Funktionalität ist und nur letztere einen Zugriff auf das Erweiterungsdatenfeld ermöglichen.

5. Vorrichtung nach einem der Ansprüche 1 bis 4, wobei Standardtools, wie Browser, Viewer, Kopieren, Einfügen, Import und Export, auf Objekttypen mit und ohne Erweiterungsdatenfeld in der jeweiligen Standardform anwendbar sind.

6. Vorrichtung nach einem der Ansprüche 1 bis 5, mit einem Extensionmechanismus mit generischer Schnittstelle für Erweiterungen im Userinterface und/oder in der Datenhaltung.

7. Vorrichtung nach einem der Ansprüche 1 bis 6, wobei das mindestens eine Erweiterungsdatenfeld eine Extension-Id-Liste umfasst, anhand der Erweiterungsdaten identifizierbar sind.

8. Vorrichtung nach einem der Ansprüche 1 bis 7, wobei in dem Erweiterungsdatenfeld Daten für gegenüber dem Basisobjektmodell erweiterte Funktionalitäten, insbesondere Graphikdaten oder mathematische Funktionen speicherbar sind.

9. Verfahren zum Steuern oder Regeln eines Systems basierend auf einem Objektmodell, welches die Funktionalität eines Runtimesystems und/oder des zu steuernden bzw. zu regelnden Systems repräsentiert, wobei das Objektmodell einen ersten Objekttyp mit vorbestimmter Datenstruktur umfasst,
**gekennzeichnet, durch**
Einlesen oder Erzeugen eines zweiten Objekttyps, der sich auf den ersten Objekttyp bezieht, und
Instanziieren des zweiten Objekttyps, wobei ein dem ersten Objekttyp zugeordnetes Objekt gebildet wird, an das ein Erweiterungsdatenfeld gemäß dem zweiten Objekttyp angebracht wird.

10. Verfahren nach Anspruch 9, wobei mindestens ein Typdatenfeld an dem ersten Objekttyp zu dessen Zuordnung zu einem SnapIn angebracht wird.

11. Verfahren nach Anspruch 9 oder 10, wobei das Erweiterungsdatenfeld Daten für gegenüber dem Basisobjektmodell erweiterte Funktionalitäten umfasst.

12. Verfahren nach Anspruch 9, 10 oder 11, wobei Zusatztools, insbesondere erweiterte Editoren und/oder Views, die nicht dem Basisobjektmodell angehören, beim Einlesen oder Erzeugen des zweiten Objekttyps auf das Erweiterungsdatenfeld zugreifen oder dort Daten ablegen.

13. Verfahren nach einem der Ansprüche 9 bis 12, wobei Standardtools, die dem Basisobjektmodell angehören, in gleicher Weise auf erste und zweite Objekttypen anwendbar sind.

14. Verfahren nach einem der Ansprüche 9 bis 13, wobei in dem Erweiterungsdatenfeld Daten für gegenüber dem Basisobjektmodell erweiterte Funktionalitäten, insbesondere Graphikdaten oder mathematische Funktionen, gespeichert werden.
